# EUROPEAN PATENT APPLICATION

(11) **EP 4 175 043 A1**
(43) Date of publication of application: **03.05.2023**
(21) Application number: 22739638.9
(22) Date of filing: 11.01.2022
(51) Int. Cl.: H01M 50/383, H01M 50/35, H01M 50/24, H01M 50/211, H01M 50/249, H01M 50/251

(54) **BATTERY MODULE AND BATTERY PACK COMPRISING SAME**

(30) Priority: 15.01.2021 KR 20210006196
(71) Applicant: LG Energy Solution, Ltd., Seoul 07335 (KR)
(72) Inventor: JO, Sang-Hyun, Daejeon 34122 (KR); KONG, Yu-Dam, Daejeon 34122 (KR); KIM, Seung-Hyun, Daejeon 34122 (KR); SHIN, Jin-Kyu, Daejeon 34122 (KR); OH, Young-Hoo, Daejeon 34122 (KR); OK, Seung-Min, Daejeon 34122 (KR); HONG, Sung-Goen, Daejeon 34122 (KR)
(74) Representative: Hoffmann Eitle
(86) International application number: PCT/KR2022/000500
(87) International publication number: WO 2022/154443

(57) **Abstract**

A battery module according to an embodiment of the present disclosure includes: a cell stack in which a plurality of battery cells are vertically stacked; a module housing including a base plate supporting the cell stack, and a pair of side plates covering both side portions of the cell stack and each including a spark direction changing portion formed by bending an end portion of the side plate in a longitudinal direction of the side plate toward the cell stack; and a bus bar frame assembly covering an opening portion formed on a side of the module housing in a longitudinal direction of the module housing, the bus bar frame assembly including a bus bar frame coupled to a side of the cells tack in a longitudinal direction of the cell stack and a bus bar located on the bus bar frame and coupled to an electrode lead of the battery cell.

## Description

### TECHNICAL FIELD

The present disclosure relates to a battery module, a battery pack including the same, and an energy storage system (ESS) and a vehicle including the battery pack. More particularly, the present disclosure relates to a battery module having a structure capable of, when venting of a battery cell occurs, discharging venting gas to the outside and preventing a spark containing high-temperature electrode active material and metal particles from leaking to the outside of the battery module to prevent a fire and explosion, a battery pack including the battery module, and an energy storage system (ESS) and a vehicle including the battery pack.

The present application claims priority to Korean Patent Application No. 10-2021-0006196 filed on January 15, 2021 in the Republic of Korea, the disclosures of which are incorporated herein by reference.

### BACKGROUND ART

A battery pack applied to an energy storage system (ESS) and/or an electric vehicle may be manufactured to include a plurality of battery modules to which high-power and high-capacity lithium secondary batteries are applied. In order to satisfy the output power characteristics of a battery pack required by an ESS and/or an electric vehicle and realize high capacity, the number of lithium secondary batteries included in one battery module may be increased, and the number of battery modules included in one battery pack may be increased.

However, when a fire or explosion occurs in a battery pack including such a large number of lithium secondary batteries, damage is inevitably increased.

A fire occurring in a battery pack starts from an abnormal temperature rise and internal gas generation of a lithium secondary battery in a battery module. When a temperature of a lithium secondary battery abnormally rises and internal gas is generated, and thus internal pressure of the lithium secondary battery increases to a certain level or higher, venting of the lithium secondary battery occurs, and thus, high-temperature gas is ejected to the outside of the lithium secondary battery, and a high-temperature spark containing electrode active material and aluminum particles is ejected.

In this case, in order to prevent an increase in internal pressure of a battery module, venting gas should be able to be rapidly discharged to the outside of the battery module. However, when a high-temperature spark is discharged along with the venting gas to the outside of the battery module, the venting gas, the high-temperature spark, and oxygen may meet to cause a fire.

Accordingly, there is a demand to develop a battery module having a structure capable of, even when thermal runaway occurs due to abnormality such as a short circuit in a battery cell, rapidly discharging venting gas to the outside of the battery module and effectively preventing a high-temperature spark containing electrode active material and aluminum particles from leaking to the outside.

Also, when a structure such as a bus bar frame applied to prevent a short circuit between a plurality of lithium secondary batteries is damaged due to continuous contact with a spark and high-temperature gas, oxygen may be easily introduced from the outside of a battery module into the battery module, and a fire may even spread into the battery module. Also, when the bus bar frame is damaged, electrode leads of adjacent lithium secondary batteries which are kept apart from each other due to the bus bar frame may contact each other, and an event may spread.

Accordingly, there is a demand to develop a battery module having a structure capable of, even when some structures are damaged due to a spark and high-temperature gas, preventing a free inflow of external oxygen and preventing an event from spreading due to a short circuit between adjacent lithium secondary batteries.

### DISCLOSURE

### Technical Problem

The present disclosure is designed to solve the problems of the related art, and therefore the present disclosure is directed to providing a battery module having a structure capable of, when an internal event occurs, rapidly discharging venting gas, and effectively preventing a high-temperature spark from leaking to the outside.

The present disclosure is also directed to providing a battery module having a structure capable of, even when some structures are damaged due to a spark and high-temperature gas, preventing external oxygen from being easily introduced into the battery module and preventing a short circuit between adjacent lithium secondary batteries.

However, the technical purpose to be solved by the present disclosure is not limited to the above, and other objects not mentioned herein will be clearly understood by one of ordinary skill in the art from the following disclosure.

### Technical Solution

A battery module according to an embodiment of the present disclosure includes: a cell stack in which a plurality of battery cells are vertically stacked; a module housing including a base plate supporting the cell stack, and a pair of side plates covering both side portions of the cell stack and each including a spark direction changing portion formed by bending an end portion of the side plate in a longitudinal direction of the side plate toward the cell stack; and a bus bar frame assembly covering an opening portion formed on a side of the module housing in a longitudinal direction of the module housing, the bus bar frame assembly including a bus bar frame coupled to a side of the cells tack in a longitudinal direction of the cell stack and a bus bar located on the bus bar frame and coupled to an electrode lead of the battery cell.

The spark direction changing portion may have a shape in which the side plate is bent twice in a direction perpendicular to an extending direction of the side plate.

The battery module may further include a fire-proof sheet located between the bus bar frame assembly and the cell stack.

The fire-proof sheet may be formed of a mica material.

The fire-proof sheet may include a plurality of sheet slits through which the electrode lead of the battery cell passes.

The bus bar frame may include a plurality of frame slits, wherein a number of sheet slits corresponding to the plurality of frame slits are provided at positions corresponding to the plurality of frame slits.

The fire-proof sheet may include at least one sheet hole.

The bus bar frame may include at least one frame protrusion, wherein the at least one frame protrusion is inserted into the at least one sheet hole to fix the fire-proof sheet.

The module housing may further include a fastening frame connecting a pair of spark direction changing portions.

The fastening frame may include at least one fastening protrusion, wherein the at least one fastening protrusion is inserted into the at least one sheet hole to fix the fire-proof sheet.

A battery pack according to an embodiment of the present disclosure includes the battery module according to an embodiment of the present disclosure.

An energy storage system (ESS) according to an embodiment of the present disclosure includes the battery pack according to an embodiment of the present disclosure.

A vehicle according to an embodiment of the present disclosure includes the battery pack according to an embodiment of the present disclosure.

### Advantageous Effects

According to an aspect of the present disclosure, even when some structures are damaged due to a spark and high-temperature gas, venting gas may be rapidly discharged and a high-temperature spark may be effectively prevented from leaking to the outside.

According to another aspect of the present disclosure, even when some structures are damaged due to a spark and high-temperature gas, external oxygen may be prevented from being easily introduced into a battery module and a short circuit between adjacent lithium secondary batteries may be prevented.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view illustrating a battery module according to an embodiment of the present disclosure.
FIG. 2 is a plan view illustrating a state where a bus bar frame assembly and a fire-proof sheet are removed from the battery module of FIG. 1.
FIG. 3 is a partial cross-sectional view illustrating the battery module of FIG. 1.
FIG. 4 is a view illustrating a state where a bus bar frame assembly and a fire-proof sheet are coupled to a module housing according to the present disclosure.
FIG. 5 is an exploded perspective view illustrating a part of a module housing, a bus bar frame assembly, and a fire-proof sheet according to the present disclosure.
FIG. 6 is a view illustrating a structure in which a fire-proof sheet is directly coupled to a module housing according to the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

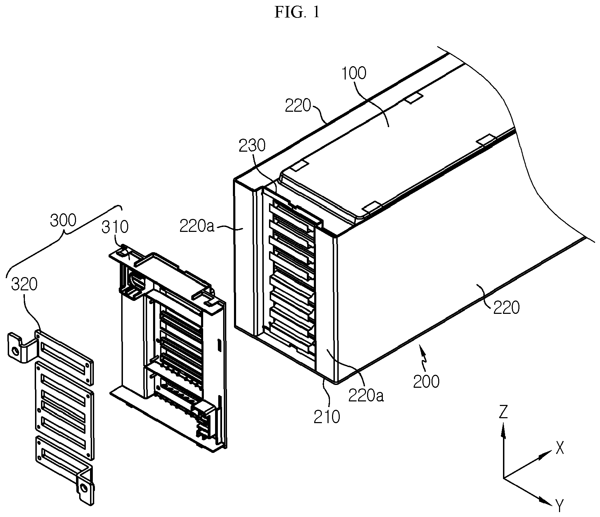

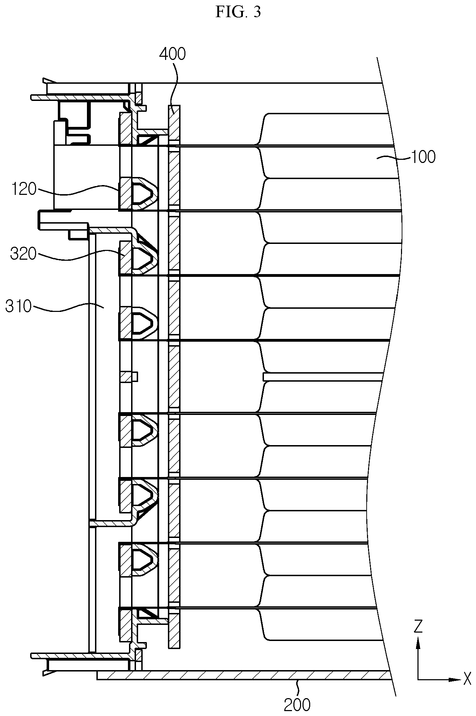

Referring to FIGS. 1 through 3, a battery module according to an embodiment of the present disclosure includes a cell stack in which a plurality of battery cells 100 are stacked in a vertical direction (direction parallel to a Z-axis), a module housing 200 in which the cell stack is accommodated, and a pair of bus bar frame assemblies 300 covering opening portions formed on a side and the other side of the module housing 200 in a longitudinal direction (direction parallel to an X-axis) of the module housing 200. The battery module may further include, in addition to the above elements, a fire-proof sheet 400 located between the bus bar frame assembly 300 and the cell stack and coupled to the bus bar frame assembly 300.

The battery cell 100 may be a pouch-type battery cell. In this case, the battery cell 100 includes an electrode assembly (not shown), a pouch case 110 in which the electrode assembly is accommodated, and a pair of electrode leads 120 connected to the electrode assembly and drawn out of the pouch case 110. The pair of electrode leads 120 are drawn in opposite directions in a longitudinal direction (direction parallel to the X-axis) of the battery cell 100.

The module housing 200 includes a base plate 210 supporting the cell stack and a pair of side plates 220 covering both side portions of the cell stack. Each of the pair of side plates 220 may include spark direction changing portions 220a formed by bending an end portion and the other end portion of the side plate 220 in a longitudinal direction of the side plate 220 toward the cell stack.

The spark direction changing portion 220a may have a shape in which, for example, an end portion of the side plate 220 in the longitudinal direction of the side plate 220 is bent twice in a direction substantially perpendicular to an extending direction of the side plate 220.

The opening portion formed on a side of the module housing 200 in the longitudinal direction of the module housing 200 is formed between a pair of spark direction changing portions 220a respectively provided on the pair of side plates 220. The electrode lead 120 of the battery cell 100 may be exposed to the outside of the module housing 200 through the opening portion formed between the pair of spark direction changing portions 220a.

Because the battery module according to an embodiment of the present disclosure includes the spark direction changing portion 220a as described above, a spark discharged during venting of the battery cell 100 is prevented from being ejected to the outside of the module housing 200 in the longitudinal direction (direction parallel to the X-axis) of the module housing 200.

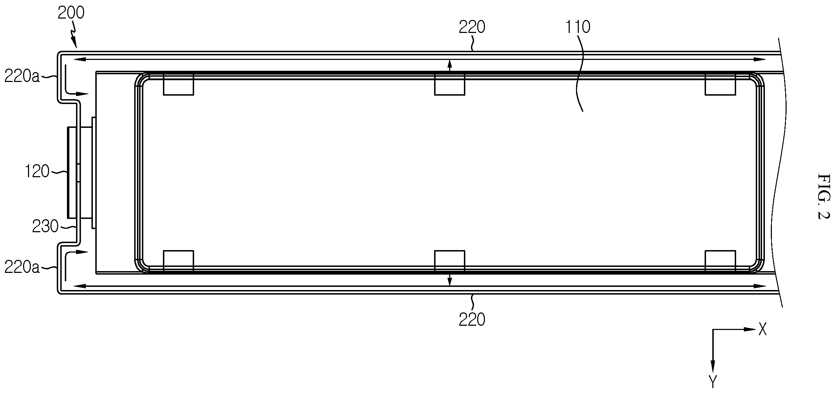

That is, a high-temperature spark ejected through both side portions of the battery cell 100 in a width direction (direction parallel to a Y-axis) of the battery cell 100 of the cell stack during venting of the battery cell 100 moves toward an end portion and the other end portion of the battery module in a longitudinal direction (direction parallel to the X-axis) of the battery module and then switches a moving direction toward the cell stack (see an arrow direction of FIG. 2).

The module housing 200 may further include a fastening frame 230 connecting a pair of spark direction changing portions 220a that are adjacent to each other and having an empty central portion. The fastening frame 230 is located between the bus bar frame assembly 300 and the fire-proof sheet 400. When the fastening frame 230 is provided, the bus bar frame assembly 300 and the fire-proof sheet 400 may be closely attached to the fastening frame 230, and may be fastened to each other through the empty central portion of the fastening frame 230.

Although not shown, the opening portions of the module housing 200 of the present disclosure are formed on both sides of the module housing 200 in the longitudinal direction of the module housing 200. Accordingly, the pair of spark direction changing portions 220a are also provided on a side and the other side of the module housing 200 in the longitudinal direction of the module housing 200.

Referring to FIGS. 1 through 5, the bus bar frame assembly 300 includes a bus bar frame 310 and at least one bus bar 320. A pair of bus bar frame assemblies 300 are provided, and in this case, the pair of bus bar frame assemblies 300 respectively cover the opening portion formed on a side and the opening portion formed on the other side of the module housing 200 in the longitudinal direction (direction parallel to the X-axis) of the module housing 200.

The bus bar frames 310 cover the opening portion formed on a side and the opening portion formed on the other side of the module housing 200 in the longitudinal direction of the module housing 200, and are coupled to a side and the other side of the cell stack in the longitudinal direction (direction parallel to the X-axis) of the cell stack.

The bus bar frame 310 may be formed of a resin material having electrical insulation. The bus bar frame 310 includes a plurality of frame slits 310b through which the electrode lead 120 of the battery cell 100 passes. The bus bar frame 310 may further include at least one frame protrusion 310a protruding toward the fire-proof sheet 400 to be coupled to the fire-proof sheet assembly 400.

The bus bar frame 310 has a shape corresponding to an end portion and the other end portion of the module housing 200 in the longitudinal direction of the module housing 200, that is, the spark direction changing portion 220a, and is closely attached to the module housing 200. When the module housing 200 includes the fastening frame 230 as described above, the bus bar frame 310 is closely attached to the spark direction changing portion 220a and the fastening frame 230.

The bus bar 320 is located on an outer surface of the bus bar frame 310, and is coupled to the electrode lead 120 passing through the frame slit 310b, to electrically connect the plurality of battery cells 100. The bus bar 320 may include a bus bar slit 320b through which the electrode lead 120 passes. In this case, the bus bar slit 320b and the frame slit 310b are formed at positions corresponding to each other. The electrode lead 120 sequentially passes through the frame slit 310b and the bus bar slit 320b and then is bent to be coupled to the bus bar 320.

Referring to FIGS. 1 through 5, the fire-proof sheet 400 is located between the bus bar frame assembly 300 and the cell stack, and is coupled to the bus bar frame assembly 300. The fire-proof sheet 400 is located on both sides of the module housing 200 in the longitudinal direction of the module housing 200.

The fire-proof sheet 400 may be a sheet formed of a mica material capable of withstanding high-temperature venting gas and sparks and even fires. The fire-proof sheet 400 includes a plurality of sheet slits 400b through which the electrode lead 120 passes. A number of sheet slits 400b corresponding to the frame slits 310b and the bus bar slits 320b are provided at positions corresponding to the frame slits 310b formed in the bus bar frame 310 and the bus bar slits 320b formed in the bus bar 320. Accordingly, the electrode lead 120 of the battery cell 100 sequentially passes through the sheet slit 400b of the fire-proof sheet 400 and the frame slit 310b of the bus bar frame 310 and is coupled to the bus bar 320.

Even when the bus bar frame 310 formed of a resin material is damaged due to high-temperature venting gas and sparks, the fire-proof sheet 400 may maintain its structure, and thus, positions of the plurality of electrode leads 120 respectively inserted into the plurality of sheet slits 400b may be maintained. Also, the fire-proof sheet 400 may allow high-temperature venting gas to be discharged to the outside through a gap between the sheet slit 400b and the electrode lead 120, and may minimize outward ejection of a high-temperature spark containing active material and aluminum particles. Also, even when the bus bar frame 310 formed of a resin material is damaged, the fire-proof sheet 400 may prevent oxygen from being easily introduced from the outside into the battery module.

Accordingly, the fire-proof sheet 400 may minimize the risk of a fire around the bus bar frame 310 even when an event occurs in the battery module, and even when a fire occurs around the bus bar frame 310, the fire-proof sheet 400 may delay the spread of the fire into the battery module. Also, the fire-proof sheet 400 may prevent an event from spreading due to a short circuit between the battery cells 100 caused by damage to the bus bar frame 310.

When the bus bar frame 310 includes the frame protrusion 310a, the fire-proof sheet 400 include at least one sheet hole 400a formed to have a position and a shape corresponding to the frame protrusion 310a for fastening to the bus bar frame 310. The frame protrusion 310a is inserted into the sheet hole 400a to fix the fire-proof sheet 400.

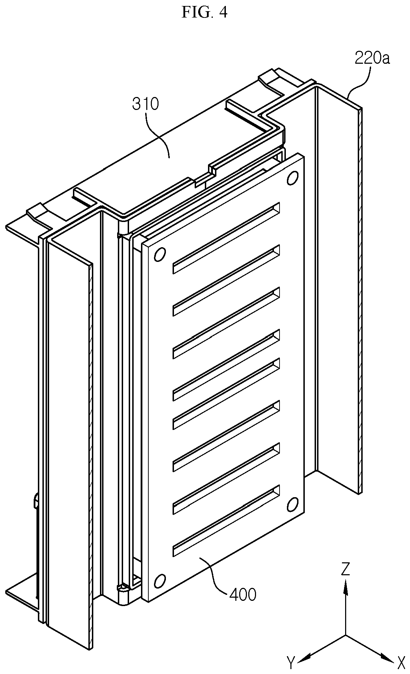

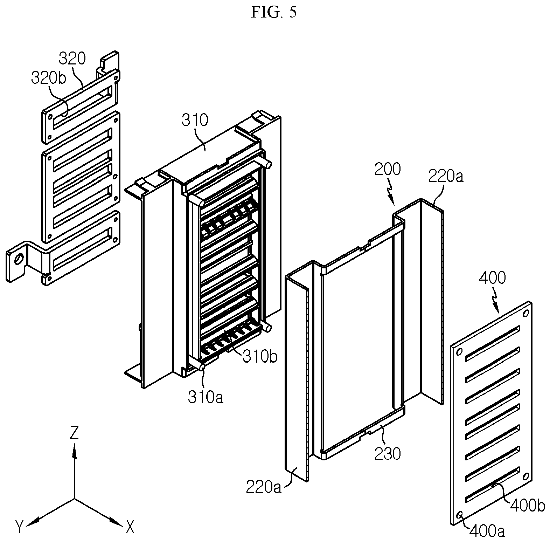

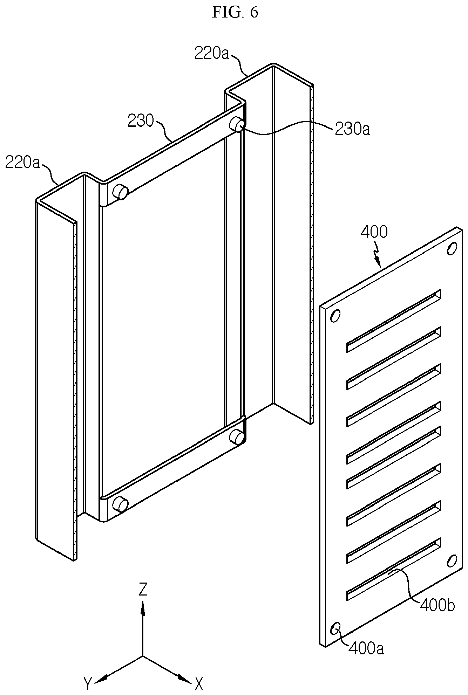

FIG. 6 illustrates a structure in which the fire-proof sheet 400 of the present disclosure is fastened to the fastening frame 230 of the module housing 200, unlike in FIGS. 4 and 5. In this case, the fastening frame 230 may include at least one fastening protrusion 230a protruding toward the fire-proof sheet 400.

A number of fastening protrusions 230a corresponding to the sheet holes 400a of the fire-proof sheet 400 may be provided at positions corresponding to the sheet holes 400a of the fire-proof sheet 400. The fastening protrusion 230a is inserted into the sheet hole 400a to fix the fire-proof sheet 400.

The module housing 200 including the fastening frame 230 may be entirely formed of a metal material to ensure rigidity of the battery module and withstand high-temperature gas and sparks discharged during an internal event. In this case, the fastening protrusion 230a may also be formed of a metal material, and thus, a fastening portion between the fire-proof sheet 400 and the fastening frame 230 may be prevented from being damaged by high-temperature gas and sparks.

A battery pack according to an embodiment of the present disclosure includes the battery module according to an embodiment of the present disclosure. Also, an energy storage system (ESS) according to an embodiment of the present disclosure includes the battery pack according to an embodiment of the present disclosure. Also, a vehicle according to an embodiment of the present disclosure includes the battery pack according to an embodiment of the present disclosure. The vehicle includes an electric vehicle.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

## Claims

1. A battery module comprising:
a cell stack in which a plurality of battery cells are vertically stacked;
a module housing comprising a base plate supporting the cell stack, and a pair of side plates covering both side portions of the cell stack and each comprising a spark direction changing portion formed by bending an end portion of the side plate in a longitudinal direction of the side plate toward the cell stack; and
a bus bar frame assembly covering an opening portion formed on a side of the module housing in a longitudinal direction of the module housing, the bus bar frame assembly comprising a bus bar frame coupled to a side of the cells tack in a longitudinal direction of the cell stack and a bus bar located on the bus bar frame and coupled to an electrode lead of the battery cell.

2. The battery module of claim 1, wherein the spark direction changing portion has a shape in which the side plate is bent twice in a direction perpendicular to an extending direction of the side plate.

3. The battery module of claim 1, further comprising a fire-proof sheet located between the bus bar frame assembly and the cell stack.

4. The battery module of claim 3, wherein the fire-proof sheet is formed of a mica material.

5. The battery module of claim 3, wherein the fire-proof sheet comprises a plurality of sheet slits through which the electrode lead of the battery cell passes.

6. The battery module of claim 5, wherein the bus bar frame comprises a plurality of frame slits,
wherein a number of sheet slits corresponding to the plurality of frame slits are provided at positions corresponding to the plurality of frame slits.

7. The battery module of claim 3, wherein the fire-proof sheet comprises at least one sheet hole.

8. The battery module of claim 7, wherein the bus bar frame comprises at least one frame protrusion,
wherein the at least one frame protrusion is inserted into the at least one sheet hole to fix the fire-proof sheet.

9. The battery module of claim 7, wherein the module housing further comprises a fastening frame connecting a pair of spark direction changing portions.

10. The battery module of claim 9, wherein the fastening frame comprises at least one fastening protrusion,
wherein the at least one fastening protrusion is inserted into the at least one sheet hole to fix the fire-proof sheet.

11. A battery pack comprising the battery module according to any one of claims 1 through 10.

12. An energy storage system (ESS) comprising the battery pack according to claim 11.

13. A vehicle comprising the battery pack according to claim 11.
